# EUROPEAN PATENT SPECIFICATION

(11) **EP 2 256 853 B1**
(45) Date of publication and mention of the grant of the patent: **30.03.2016**
(21) Application number: 10163099.4
(22) Date of filing: 18.05.2010
(51) Int. Cl.: H01M 10/04

(54) **Electrode assembly for a battery and a method of forming an electrode assembly**
Elektrodenanordnung für eine Batterie und Verfahren zum Bilden einer Elektrodenanordnung
Ensemble d'électrode pour batterie et procédé de formation de l'ensemble d'électrode

(30) Priority: 28.05.2009 US 181862 P; 29.12.2009 US 649111
(43) Date of publication of application: 01.12.2010
(73) Proprietor: Samsung SDI Co., Ltd., Gyeonggi-do (KR)
(72) Inventor: Ahn, Changbum, Gyeonggi-do (KR); Shin, Jeongsoon, Gyeonggi-do (KR); Sohn, Youngbae, Gyeonggi-do (KR)
(74) Representative: Walaski, Jan Filip

(56) References cited:
- EP-A2- 1 150 371
- WO-A1-2004/068626
- WO-A1-2004/097971

## Description

The present invention relates to an electrode assembly for a secondary battery and a method of manufacturing the same.

A secondary battery is generally manufactured by accommodating an electrode assembly having a positive electrode plate, a negative electrode plate, and a separator interposed therebetween into an exterior case together with an electrolyte.

In a high capacity secondary battery, a wound electrode assembly including a plurality of unit electrodes and separators is used. In this type electrode assembly, when the number of winding increases, it is not easy to exactly arrange the unit electrodes by interposing the separators therebetween.

WO2004/097971 discloses a stacked lithium secondary battery having a wound electrode assembly.

According to the invention, there is provided an electrode assembly for a battery according to claim 6 and a method of forming an electrode assembly according to claim 1.

Embodiments of the present invention provide an electrode assembly having a structure in which entire unit electrodes are exactly arranged and a method of manufacturing the same.

In accordance with an aspect of the present invention, there is provided an electrode assembly for a battery comprising: a plurality of first; a plurality of second electrodes wherein the plurality of first electrodes and the plurality of second electrodes are arranged into an alternating stack of electrodes; a first separator that is wound through the alternating stack of electrodes so that the first separator is interposed between adjacent first and second electrodes; and a second separator that is wound through the stack of electrodes so that the second separator is interposed between adjacent second and first electrodes and so that the second separator is interposed between adjacent portions of the first separator that are interposed between the adjacent first and second electrodes.

Preferably, the first separator defines a plurality of stacked first separator members and the second separator defines a plurality of stacked second separator members and wherein the first and second stacked separator members are alternately interposed between first and second electrodes within the stack of electrodes.

Preferably, at inner end portions of the first and second separators, an inner surface of the first separator and an inner surface of the second separator face each other. Preferably, inner ends of both the first and second separators are positioned at the innermost region of the electrode stack. Preferably, the first electrode comprises a positive electrode and the second electrode comprises a negative electrode.

In some embodiments, the first electrodes and second electrodes are each comprised of at least one positive electrode and at least one negative electrode that are separated by discrete separators.

In one embodiment, the first electrode comprises a first and a second positive electrode and a negative electrode that is interposed between the first and second positive electrodes wherein the discrete separators are interposed between the first and second positive electrodes and the negative electrode and the second electrodes comprise a first and a second negative electrode and a positive electrode that is interposed between the first and second negative electrodes wherein the discrete separators are interposed between the first and second negative electrodes and the positive electrode plate.

Preferably, the first electrode comprises a positive electrode plate having a first and a second side wherein the positive electrode plate defines an electrode collector and wherein the first and the second side of the positive electrode plate are coated with a positive electrode active material and the second electrode comprises a negative electrode plate having a first and a second side wherein the negative electrode plate defines an electrode collector and wherein the first and the second side of the negative electrode plate are coated with a negative electrode active material.

Preferably, the first separator is a continuous piece of material that is wound about the stack of electrodes in a first direction and the second separator is a continuous piece of material that is wound about the stack of electrodes in a first direction.

Preferably, a centre electrode is positioned between the first separator and the second separator at inner ends of the separators.

According to another aspect of the invention, there is provided method of forming an electrode assembly having an innermost region, comprising: providing a first separator having alternating first and second electrodes positioned thereon; providing a second separator having alternating first and second electrodes positioned thereon, with a first end of the first separator adjacent a first end of the second separator; winding the first and second separators together so the first ends of the first and second separator are positioned within the innermost region of the electrode assembly.

Preferably, the method further comprises: winding the first and second separators such that the first and second separators are alternately interposed between the first and second electrodes.

Preferably, before winding, the first ends of the first and second separators overlap each other such that an inner surface of the first separator and an inner surface of the second separator face each other at the innermost region of the electrode assembly.

Preferably the electrodes on the first separator are positioned on an opposite side of the separator to the electrodes positioned on the second separator and a centre electrode is positioned between the separators at the overlapping portion.

Preferably, the first electrodes are positive electrodes and the second electrodes are negative electrodes.

Preferably, the first and second electrodes are each comprised of at least one positive electrode and at least one negative electrode that are separated by discrete separators.

Preferably, the electrodes are positioned on the separators so that adjacent electrodes on the separators are spaced further apart from each other, the further the electrodes are positioned from the first ends of the separators.

Hereinafter, embodiments of the present invention will be described in detail with reference to the accompanying drawings, in which.
FIG. 1 is a perspective view illustrating a secondary battery according to an embodiment of the present invention;
FIG. 2A is a schematic view illustrating a first electrode assembly in FIG. 1;
FIG 2B is a schematic view illustrating a second electrode assembly of FIG. 1;
FIG. 3 is a view illustrating a manufacturing process of the electrode assembly in FIG. 2A;
FIG. 4A is a schematic view illustrating a first electrode member of the electrode assembly as shown in FIG. 2B according to another embodiment of the present invention;
FIG. 4B is a schematic view illustrating a second electrode member of the electrode assembly as shown in FIG. 2B according to another embodiment of the present invention;
FIG. 5 is a schematic view illustrating the secondary battery in FIG. 1 according to another embodiment of the present invention; and
FIG. 6 is a view illustrating a manufacturing process of the secondary battery in FIG. 5.

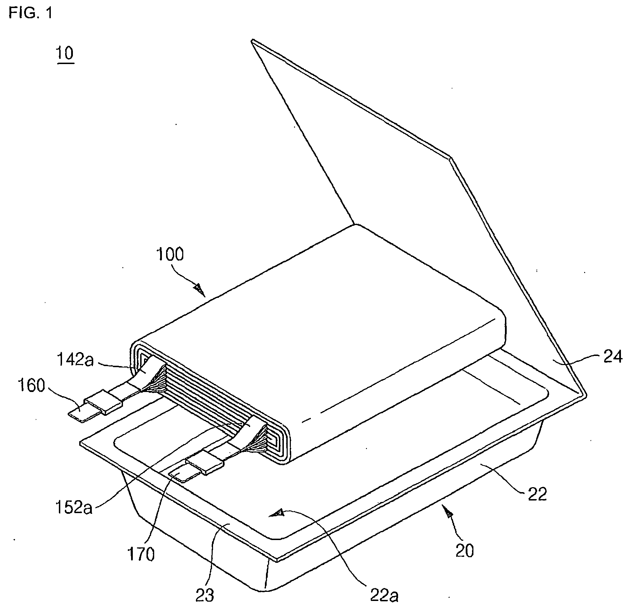

FIG. 1 is a perspective view illustrating a secondary battery including an electrode assembly according to an embodiment of the present invention. Referring to FIG. 1, a secondary battery 10 is a pouch type secondary battery and includes a pouch case 20 and an electrode assembly 100 to be accommodated in the pouch case 20.

The pouch case 20 includes a body 22 and a cover 24. The body 22 includes an accommodating portion 22a to accommodate the electrode assembly 100 and a sealing member 23 extending to the outside of the accommodating portion 22a. The cover 24 is integrally coupled to one side of the sealing member 23. After the electrode assembly 100 is accommodated in the accommodating portion 22a of the body 22, the body 22 and the cover 24 contact closely with each other and then the sealing member 23 is thermally welded.

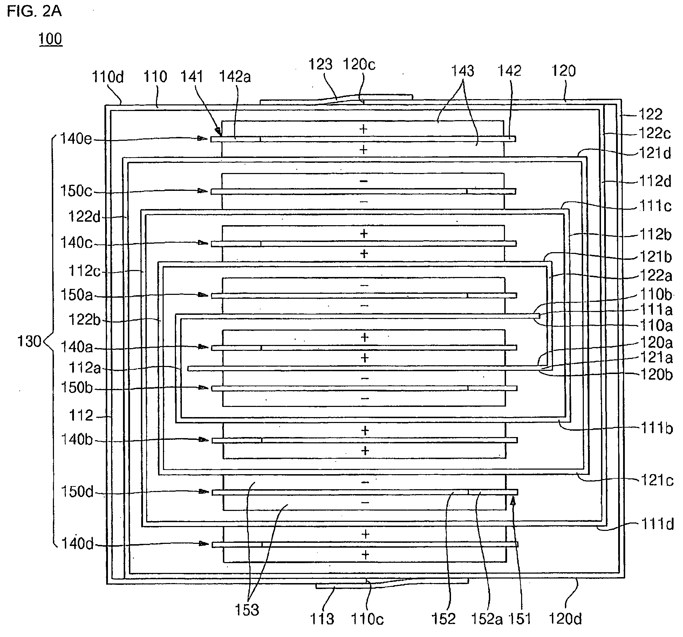

FIG. 2A is a schematic view illustrating the electrode assembly in FIG. 1. Referring to FIGS. 1 and 2A, the electrode assembly 100 includes a first separator 110, a second separator 120, and a plurality of electrodes 130.

The first separator 110 is wound in a direction (counterclockwise from the center outward when viewing the drawings). The first wound separator 110 includes a plurality of first stacked separator members 111a, 111b, 111 c, and 111d and a plurality of first connectors 112a, 112b, 112c, and 112d to connect the first separator members 111a, 111b, 111c, and 111d to each other. Each of first separator members 111a, 111b, 111c, and 111d separates two electrodes 130 positioned at both sides thereof. An outer end 110c of the first separator 110 is attached to the outer circumferential surface 120d of the second separator 120 with a sealing tape 113. The first separator 110 has a plurality of fine porosities through which lithium ions migrating between the electrodes 130 pass. The first separator 110 may be made of a polymer such as polyethylene (PE) or polypropylene (PP).

The second separator 120 and the first separator 110 are wound in a direction (counterclockwise from the center outward when viewing in the drawings) in alternating fashion. The second wound separator 120 includes a plurality of second stacked separator members 121a, 121b, 121c, and 121 d and a plurality of second connectors 122a, 122b, 122c, and 122d to connect the second separator members 121a, 121b, 121c, and 121d to each other. The second separator members 121a, 121b, 121c, and 121d are positioned between the first separator members 111a, 111b, 111c, and 111d, and the second connectors 122a, 122b, 122c, and 122d are positioned between the first connectors 112a, 112b, 112c, and 112d. Due to this structure, the first separator members 111a, 111b, 111c, and 111d of the first separator 110 and the second separator members 121a, 121b, 121c, and 121d of the second separator 120 are alternatively positioned in a stack form. Each of the second separator members 121a, 121b, 121c, and 121d separates the two electrodes 130 positioned at both sides thereof. An inner surface 120a of the second separator member 121a positioned innermost among the second separator members 121a, 121b, 121c, and 121d faces to an inner surface 110a of the first separator member 111a positioned innermost among the first separator members 111a, 111b, 111c, and 111d. An outer end 120c of the second separator 120 is attached to outer circumferential surface 110d of the first separator 110 with a sealing tape 123. The second separator 120 has a plurality of fine porosities through which lithium ions migrating between electrodes 130 pass. The second separator 120 may be made of a polymer such as polyethylene PE or polypropylene (PP).

The electrodes 130 are respectively positioned respectively between the first separator members 111a, 111b, 111c, and 111d of the first separator 110 and the second separator members 121a, 121b, 121c, and 121d of the second separator 120 one by one. The electrodes 130 are arranged such that respective two neighboring electrodes 130 interpose first separator 110 or the second separator 120 therebetween and the centers thereof are positioned at the same position. By doing so, all of the electrodes 130 are exactly arranged perpendicular to the separator members 111a, 111b, 111c, 111d, 121a, 121b, 121c, and 121d. A central electrode member 140a positioned between the first separator member 111a positioned innermost the first separator 110 and the second separator member 121a positioned innermost the second separator 120 is attached to the inner surface 120a of the second separator member 121a, and the remaining electrodes 130 are attached to outer surfaces of the first separator members 111a, 111b, 111c, and 111d or outer surfaces 120b of the second separator members 121a, 121b, 121c, and 121d.

The electrodes 130 include a plurality of first electrode members 140a, 140b, 140c, 140d, and 140e and a plurality of second electrode members 150a, 150b, 150c, and 150d. The first electrode members 140a, 140b, 140c, 140d, and 140e and the second electrode members 150a, 150b, 150c, and 150d are alternatively positioned. Each of the first electrode members 140a, 140b, 140c, 140d, and 140e includes a positive electrode plate 141. The positive electrode plate 141 includes a positive electrode collector 142 and positive electrode active materials 143 coated on the both side of the positive electrode collector 142. The positive electrode collector 142 is generally made of an electrically conductive metal plate such as aluminum. The positive electrode collector 142 has a positive electrode tab 142a protruded outwardly without the positive electrode active material 143. The positive electrode tab 142a of the positive electrode plate 141 is welded to a positive terminal 160 protruded to the outside of the pouch case 20 by ultrasonic or resistance welding.

The positive electrode active material 143 includes a layered lithium compound, an electrically conductive material to increase electric conductivity, and a binder to increase a binding force between the layered compound and the electrically conductive material.

Each of the second electrode members 150a, 150b, 150c, and 150d has a negative electrode plate 151. The negative electrode plate 151 includes a negative electrode collector 152 and negative electrode active materials 153 coated on both sides of the negative electrode collector 152. The negative electrode collector 152 is generally made of an electrically conductive metal plate such as copper. The negative electrode collector 152 has a negative electrode tab 152a protruded outwardly without the negative electrode active material 153. The negative electrode tab 152a of the respective negative electrode plates 151 is welded to a negative terminal 170 protruded to the outside of the pouch case 20 by ultrasonic or resistance welding. The negative electrode active material 153 is prepared by mixing a carbon material such as graphite and a binder to increase a binding force between carbon particles. In this case, the positive electrode plate may have an area smaller than that of the negative electrode plate. Further, when tin oxide (SnO) or lithium titanium oxide (LTO) is used as the negative electrode active material, the corresponding positive electrode plate may have an area larger than that of the negative electrode plate.

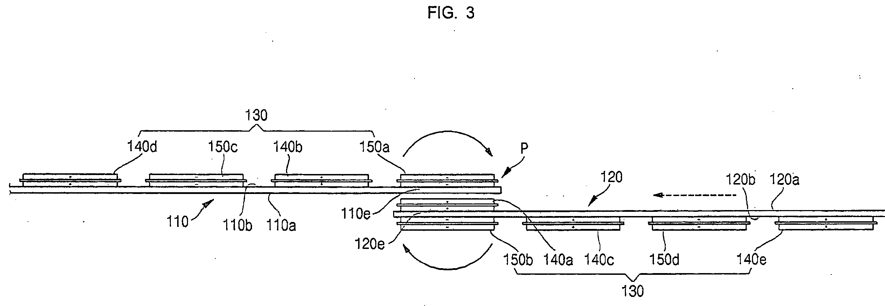

FIG. 3 shows a process for manufacturing of the electrode assembly in FIG. 2A. Referring to FIG. 3, the first separator 110 and the second separator 120 are respectively fed from the opposite sides of a winding position P.

The first separator 110 is fed from left to right toward the winding position P when viewing the drawing. The first separator 110 has an inner surface 110a becoming the inside by winding and an outer surface 110b becoming an outer side opposite to the inner surface 110a by winding. The first separator 110 includes the electrodes 130 attached thereto. The electrodes 130 attached to the first separator 110 are respectively positioned on the outer surface 110b of the first separator 110 to be spaced apart from each other in the feeding direction of the first separator 110. First electrode members 140b and 140d and second electrode members 150a and 150c of the electrodes 130 are alternatively positioned on the outer surface 110b of the first separator 110. In this embodiment of the present invention, the electrode member 150a, which is positioned on a firstly winding portion 110e of the electrodes 130 attached to the outer surface 110b of the first separator 110, becomes a second electrode member but the present invention is not limited thereto. The electrode member 150a may be a first electrode member.

The second separator 120 is fed from right to left toward the winding position P when viewing the drawing. The second separator 120 has an inner surface 120a becoming the inside by winding and an outer surface 120b becoming an outer side opposite to the inner surface 120a by winding. The second separator 120 includes a plurality of electrode members 130 attached thereto. The electrodes 130 attached to the second separator 120 are respectively positioned on the outer surface 120b of the second separator 120 to be spaced apart from each other in the feeding direction of the second separator 120. First electrode members 140c and 140e and second electrode members 150b and 150d of the electrodes 130 are alternatively positioned on the outer surface 120b of the second separator 120. In this embodiment of the present invention, the electrode member 150b, which is positioned on a firstly winding portion 120e of the electrodes 130 attached to the outer surface 120b of the second separator 120, becomes a second electrode member having the same polarity as that of the electrode member 150a. A central electrode member 140a is attached to the inner surface 120a of the second separator 120. The central electrode member 140a is positioned on the firstly winding portion 120e of the second separator to correspond to the second electrode member 150b. The central electrode member 140a becomes the first electrode member having polarity opposite to the polarity of the second electrode member 150b.

Before the winding, the first electrode member 150a is positioned above the central electrode member 140a at the winding position P by interposing the first separator 110 therebetween. By doing so, the first electrode member 150a, the central electrode member 140a, and the second electrode member 150b are sequentially arranged between the first separator 110 and the second separator 120 in a stacked form, respectively. In this state, the first electrode member 150a, the central electrode member 140a, and the second electrode member 150b are gripped and wound to form the electrode assembly 100 as shown in FIG. 2A. The electrode members 150a, 140a, and 150b are wound in the direction such that the electrode members 140b, 140c, 140d, 140e, 150a, 150b, 150c, and 150d except for the central electrode member 140a are positioned outside. The electrodes 130 may be fed during the winding, and the distance between the electrodes 130 may be easily adjusted to exactly arrange the electrodes 130 during the winding. In other words, as the winding is performing, the electrodes 130 are fed to the separators 110 and 120 such that the distance between the electrodes 130 is gradually increased. Thus, the electrodes 130 may be arranged at exact positions.

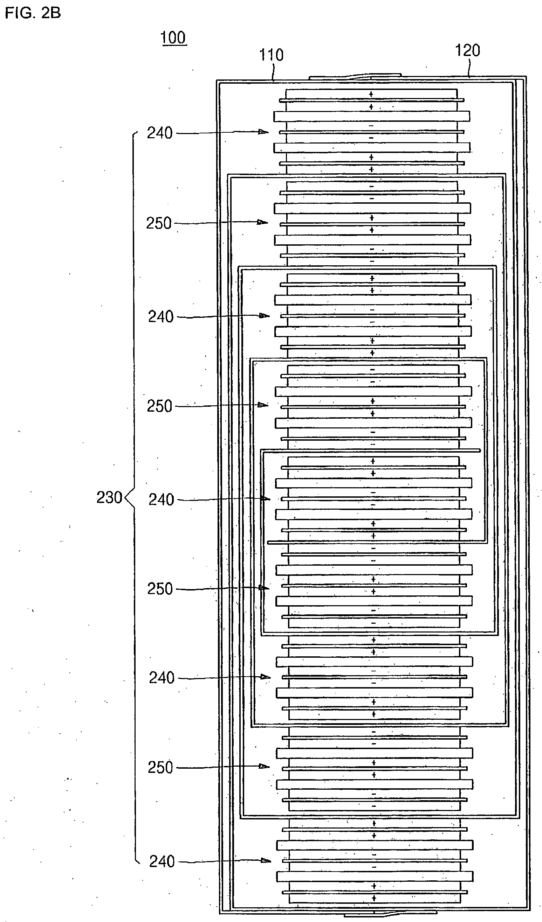

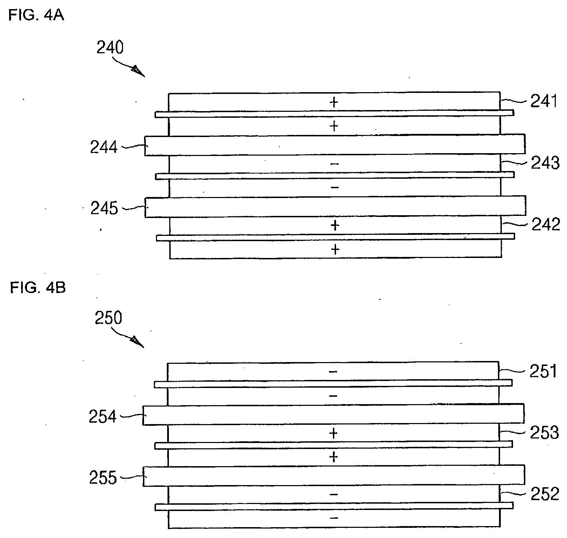

First and second electrodes according to another embodiment of the present invention are illustrated in FIGS. 4A, 4B and 2B, respectively.

Referring to FIG. 4A, a first electrode member 240 includes two positive electrode plates 241 and 242, a single negative electrode plate 243 positioned between the positive electrode plates 241 and 242, and two separators 244 and 245 respectively positioned between the negative electrode plate 243 and the positive electrode plates 241 and 242. Since the two positive electrode plates 241 and 242 are identical to the positive electrode plate 141 as shown in FIG. 2A and the negative electrode plate 243 is identical to the negative electrode plate 151 as shown in FIG. 2A, the detailed description thereof will be omitted. Fine porosities are formed in the separators 244 and 245, and lithium ions migrating between the electrode plates 241, 242, and 243 pass through the fine porosities. The separators 244 and 245 are made of a polymer such as polyethylene (PE) or polypropylene (PP).

Referring to FIG. 4B, the second electrode member 250 includes two negative electrode plates 251 and 252, a positive electrode plate 253 positioned between the negative electrode plates 251 and 252, and two separators 254 and 255 respectively positioned between the positive electrode plate 253 and the two negative electrode plates 251 and 252. Since the negative electrode plates 251 and 252 are identical to the negative electrode plate 151 as shown in FIG. 2A and the positive electrode plate 253 is identical to the positive electrode plate 141 as shown in FIG. 2A, the detailed description thereof will be omitted. Fine porosities are formed in the separators 254 and 255, and lithium ions migrating between the electrode plates 251, 252, and 253 pass through the fine porosities. The separator 254 and 255 are made of a polymer such as polyethylene (PE) or polypropylene (PP).

FIG. 2B illustrates another embodiment of an electrode assembly where the first electrode member 240 and the second electrode member 250 are alternately arranged into an electrode assembly with the separators 110 and 120 interposed therebetween in substantially the same manner as described above in conjunction with FIG. 2A. Since the arrangement of the electrode members 240, 250 and separators 110, 120 are substantially the same as the corresponding arrangement of the electrodes 140, 150 and separators 110, 120 in FIG. 2A, the detailed description thereof will be omitted.

In the embodiment of FIGS. 4A, 4B and 2B, each of the first and second electrode members are made of three electrode plates, but the present invention is not limited thereto. The first and second electrode members may be made of more electrode plates. Any structure in which electrode plates having different polarities are alternatively positioned and another electrode plates having the same polarity are positioned at both sides of the alternatively positioned electrode plate may be allowed.

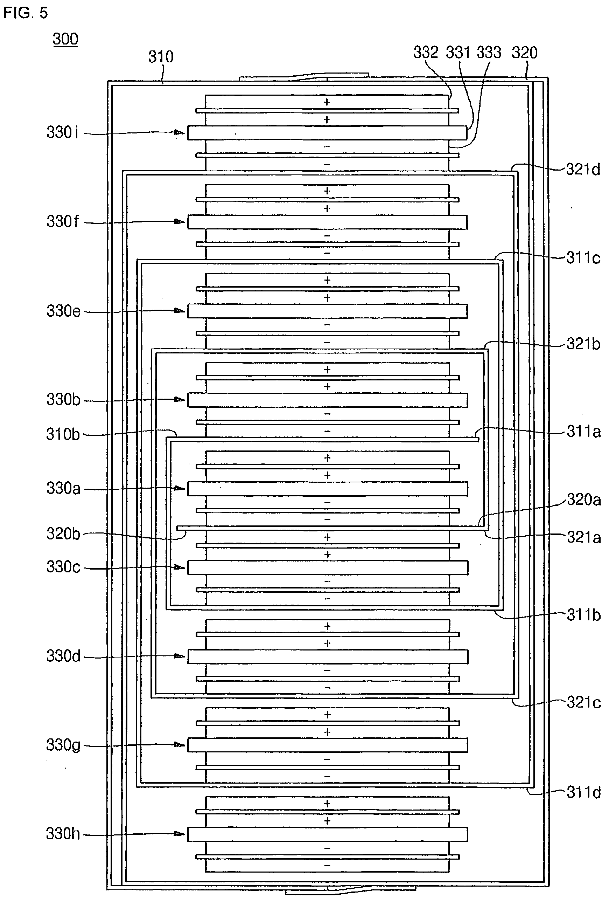

FIG. 5 is a schematic view illustrating an electrode assembly according to another embodiment of the present invention. Referring to FIG. 5, an electrode assembly 300 includes a first separator 310, a second separator 320, and a plurality of electrode members 330a, 330b, 330c, 330d, 330e, 330f, 330g, 330h, and 330i. Since structures and functions of the first separator 310 and the second separator 320 are identical to those of the first separator 110 and the second separator 120, their detailed description will be omitted.

The electrode members 330a, 330b, 330c, 330d, 330e, 330f, 330g, 330h, and 330i are respectively positioned between the first separators 311a, 311b, 311 c, and 311 d and the second separators 321a, 321b, 321c, and 321d one by one. Two neighboring electrode members of the electrode members 330a, 330b, 330c, 330d, 330e, 330f, 330g, 330b, and 330i are arranged at the same position to interpose the first separator 310 and the second separator 320. A central electrode member 330a of the electrode members 330a, 330b, 330c, 330d, 330e, 330f, 330g, 330h, and 330i which is positioned between a first separator member 311a positioned at the innermost portion side of the first separator 310 and a second separator member 321a positioned at the innermost side of the second separator 320, is attached to an inner surface 320a of the second separator member 321a, and the other electrode members 330b, 330c, 330d, 330e, 330f, 330g, 330h, and 330i, except for the central electrode member 330a, is attached to outer surfaces 310b of the first separator members 311a, 311b, 311c, and 311d, or outer surfaces 320b of the second separator members 321a, 321b, 321c, and 321d.

Each of the electrode members 330a, 330b, 330c, 330d, 330e, 330f, 330g, 330h, and 330i includes a positive electrode plate 332, a negative electrode plate 333, and a separator 331 positioned between the electrode plates 332 and 333. Fine porosities are formed in the separator 331 through which lithium ions migrating between the electrode plates 332 and 333 pass. The separator 331 may be made of a polymer such as polyethylene PE or polypropylene (PP). The positive electrode plates 332 is identical to the positive electrode plate 141 as shown in FIG. 2A, and the negative electrode plate 333 is identical to the negative electrode plate 151 as shown in FIG. 2B. Thus, the detailed description thereof will be omitted. The electrode members 330a, 330b, 330c, 330d, 330e, 330f, 330g, 330h, and 330i are formed such that electrode plates having different polarities face each other by interposing the first separators 310 or the second separators 320 therebetween.

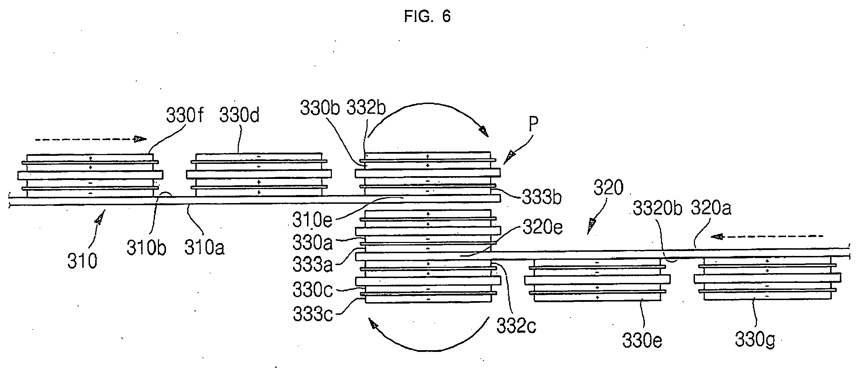

A process of manufacturing the electrode assembly as shown in FIG. 5 is illustrated in FIG. 6. Referring to FIG. 6, the first separator 310 and the second separator 320 are respectively fed from the opposite sides of the winding position P to the winding position P.

The first separator 310 is fed from left to right toward the winding position P when viewing the drawing. The first separator 310 has an inner surface 310a becoming the inside by winding and an outer surface 310b becoming an outer side opposite to the inner surface 310a by winding. The first separator 310 includes the electrode members 330b, 330d, and 330f attached thereto. The electrode members 330b, 330d, and 330f attached to the first separator 310 are respectively positioned on the outer surface 310b of the first separator 310 to be spaced apart from each other in the feeding direction of the first separator 310. The electrode members 330b, 330d, and 330f are attached to the outer surface 310b of the first separator 310 such that surfaces of the electrode members 330b, 330d, and 330f having opposite polarities alternatively contact the first separator 310. In this embodiment of the present invention, a negative electrode pate 333b of the electrode member 330b, which is positioned on the firstly winding portion 310e among a plurality of electrode members 330b, 330d, and 330f attached to the outer surface 310b of the first separator 310, contacts the first separator 310, but the present invention is not limited thereto. A positive electrode pate 332b of the first electrode member 330b may contact the first separator 310.

The second separator 320 is fed from right to left toward the winding position P when viewing the drawing. The second separator 320 has an inner surface 320a becoming an inside 320a by winding and an outer surface 320b becoming an outer side opposite to the inner surface 320a by winding. A plurality of electrode members 320c, 320e, and 320g are attached to the second separator 320. The electrode members 320c, 320e, and 320g attached to the second separator 320 are respectively positioned on the outer surface 320b of the second separator 320 to be spaced apart from each other in the feeding direction of the second separator 320. The electrode members 320c, 320e, and 320g are attached to the outer surface 320b of the second separator 320 such that surfaces of the electrode members 320c, 320e, and 320g having different polarities alternatively contact the second separator 320. In this embodiment of the present invention, a positive electrode plate 332c of the electrode member 330c, which is positioned on the firstly winding portion 320e among a plurality of electrode members 320c, 320e, and 320g on the outer surface 320b of the second separator 320 contacts the second separator 320. A central electrode member 330a is attached to the inner surface 320a of the second separator 320. The central electrode member 330a is positioned on the firstly winding portion 320e of the second separator 320 to correspond to the second electrode member 330c. A negative electrode plate 333a of the central electrode member 330a contacts the second separator 320 so that each of the negative electrode plate 333a of the central electrode member 330a and the positive electrode plate 332c of the second electrode member 330c face each side by interposing the second separator 320 therebetween.

Before the winding, the electrode member 330b is positioned above the central electrode member 330a at the winding position P by interposing the first separator 310 therebetween. By doing so, the electrode member 330b, the central electrode member 330a, and the electrode member 330c are sequentially arranged between the first separator 310 and the second separator 320 in a stacked form, respectively. In this state, the electrode member 330b, the central electrode member 330a, and the electrode member 330c are gripped and wound to form the electrode assembly 300 as shown in FIG. 5. The winding is carried out in the direction where the electrode members 330b, 330c, 330d, 330e, 330f, 330g, 330h, and 330i except for the central electrode member 330a are positioned outside. The other structures and functions are the same as those of the embodiment in FIGS. 2 and 3.

Although exemplary embodiments of the present invention have been described in detail hereinabove, it should be understood that many variations and modifications of the basic inventive concept herein described, which may appear to those skilled in the art, will still fall within the scope of the exemplary embodiments of the present invention as defined in the appended claims.

## Claims

1. A method of forming an electrode assembly having an innermost region, comprising:
providing a first separator (110, 310) having alternating first and second electrodes (150a, 140b, 150c, 140d, 330b, 330d, 330f) positioned thereon; providing a second separator (120, 320) having alternating first and second electrodes (150b, 140c, 150d, 140e, 330c, 330e, 330g) positioned thereon, with a first end of the first separator (110, 310) adjacent a first end of the second separator (120, 320);
winding the first and second separators (110, 310, 120, 320) together so the first ends of the first and second separator (110, 310, 120, 320) are positioned within the innermost region of the electrode assembly.
**characterised in that** the electrodes on the first separator (110, 310) are positioned on an opposite side of the separator to the electrodes positioned on the second separator (120, 320) and a centre electrode (140a, 330a) is positioned between the separators at the overlapping portion.

2. The method of claim 1, further comprising:
winding the first and second separators (110, 310, 120, 320) such that the first and second separators (110, 310, 120, 320) are alternately interposed between the first and second electrodes.

3. The method of claim 1 or 2, wherein, before winding, the first ends of the first and second separators overlap each other such that an inner surface (110a, 310a) of the first_separator (110, 310) and an inner surface (120a, 320a) of the second separator (120, 320) face each other at the innermost region of the electrode assembly.

4. The method of any one of claims 1 to 3, wherein the first electrodes are positive electrodes and the second electrodes are negative electrodes.

5. The method of any one of claims 1 to 4, wherein the electrodes are positioned on the separators so that adjacent electrodes on the separators (110, 310, 120, 320) are spaced further apart from each other, the further the electrodes are positioned from the first ends of the separators (110, 310, 120, 320).

6. An electrode assembly for a battery comprising:
a plurality of first electrodes (140a, 140b, 140c, 140d, 140e, 240, 330a, 330d, 330e, 330h, 330i);
a plurality of second electrodes (150a, 150b, 150c, 150d, 150e, 250, 330b, 330c, 330f, 330g) wherein the plurality of first electrodes and the plurality of second electrodes are arranged into an alternating stack of electrodes (130);
a first separator (110, 310) that is wound through the alternating stack of electrodes (130) so that the first separator (110, 310) is interposed between adjacent first and second electrodes; and
a second separator (120, 320) that is wound through the stack of electrodes (130) so that the second separator (120, 320) is interposed between adjacent second and first electrodes and so that the second separator (120, 320) is interposed between adjacent portions of the first separator that are interposed between the adjacent first and second electrodes,
**characterised in that** a centre electrode (140a, 330a) is positioned between the first separator (110, 310) and the second separator (120, 320) at inner ends of the separators, and at inner end portions of the first and second separators, an inner surface (110a, 310a) of the first separator (110, 310) and an inner surface (120a, 320a) of the second separator (120, 320) face each other.

7. The assembly of claim 6, wherein the first separator (110, 310) defines a plurality of stacked first separator members (111a, 111b, 111c, 111d, 311a, 311b, 311c, 311d) and the second separator defines a plurality of stacked second separator members (121a, 121b, 121c, 121d, 321a, 321b, 321c, 321d) and wherein the first and second stacked separator members are alternately interposed between first and second electrodes within the stack of electrodes.

8. The assembly of claim 6 or 7, wherein inner ends of both the first and second separators (110, 310, 120, 320) are positioned at the innermost region of the electrode stack.

9. The assembly of any one of claims 6 to 8, wherein the first electrode (140a, 140b, 140c, 140d, 140e, 240, 330a, 330d, 330e, 330h, 330i) comprises a positive electrode and the second electrode (150a, 150b, 150c, 150d, 150e, 250, 330b, 330c, 330f, 330g) comprises a negative electrode.

10. The assembly of any one of claims 6 to 9, wherein the first electrodes (240, 330a, 330d, 330e, 330h, 330i) and second electrodes (250, 330b, 330c, 330f, 330g) are each comprised of at least one positive electrode and at least one negative electrode that are separated by discrete separators (244, 245, 254, 255, 331).

11. The assembly of claim 10, wherein the first electrode (240) comprises a first and a second positive electrode (241, 242) and a negative electrode (243) that is interposed between the first and second positive electrodes (241, 242) wherein the discrete separators (244, 245) are interposed between the first and second positive electrodes (241, 242) and the negative electrode (243) and the second electrodes (250) comprise a first and a second negative electrode (251, 252) and a positive electrode (253) that is interposed between the first and second negative electrodes (251, 252) wherein the discrete separators (254, 255) are interposed between the first and second negative electrodes (251, 252) and the positive electrode plate (253).

12. The assembly of any one of claims 6 to 11, wherein the first electrode comprises a positive electrode plate having a first and a second side wherein the positive electrode plate defines an electrode collector and wherein the first and the second side of the positive electrode plate are coated with a positive electrode active material and the second electrode comprises a negative electrode plate having a first and a second side wherein the negative electrode plate defines an electrode collector and wherein the first and the second side of the negative electrode plate are coated with a negative electrode active material.

13. The assembly of any one of claims 6 to 12, wherein the first separator (110, 310) is a continuous piece of material that is wound about the stack of electrodes in a first direction and the second separator (120, 320) is a continuous piece of material that is wound about the stack of electrodes in a first direction.

## Patentansprüche

1. Verfahren zum Bilden einer Elektrodenanordnung mit einem innersten Bereich, umfassend:
Bereitstellen eines ersten Separators (110, 310), auf dem alternierende erste und zweite Elektroden (150a, 140b, 150c, 140d, 330b, 330d, 330f) positioniert sind, Bereitstellen eines zweiten Separators (120, 320), auf dem alternierende erste und zweite Elektroden (150b, 140c, 150d, 140e, 330c, 330e, 330g) positioniert sind, wobei ein erstes Ende des ersten Separators (110, 310) einem ersten Ende des zweiten Separators (120, 320) benachbart ist,
Zusammenwickeln des ersten und des zweiten Separators (110, 310, 120, 320), so dass die ersten Enden des ersten und des zweiten Separators (110, 310, 120, 320) innerhalb des innersten Bereiches der Elektrodenanordnung positioniert sind,
**dadurch gekennzeichnet, dass** die Elektroden auf dem ersten Separator (110, 310) auf einer Seite des Separators positioniert sind, die den auf dem zweiten Separator (120, 320) positionierten Elektroden entgegengerichtet ist, und eine Mittelelektrode (140a, 330a) zwischen den Separatoren an dem Überlappungsabschnitt positioniert ist.

2. Verfahren nach Anspruch 1, ferner umfassend:
Wickeln des ersten und des zweiten Separators (110, 310, 120, 320) derart, dass der erste und der zweite Separator (110, 310, 120, 320) abwechselnd zwischen den ersten und zweiten Elektroden eingeschoben sind.

3. Verfahren nach Anspruch 1 oder 2, wobei vor dem Wickeln die ersten Enden des ersten und des zweiten Separators einander derart überlappen, dass eine Innenfläche (110a, 310a) des ersten Separators (110, 310) und eine Innenfläche (120a, 320a) des zweiten Separators (120, 320) einander an dem innersten Bereich der Elektrodenanordnung zugewandt sind.

4. Verfahren nach einem der Ansprüche 1 bis 3, wobei die ersten Elektroden positive Elektroden und die zweiten Elektroden negative Elektroden sind.

5. Verfahren nach einem der Ansprüche 1 bis 4, wobei die Elektroden auf den Separatoren positioniert sind, so dass sich die Abstände zwischen benachbarten Elektroden auf den Separatoren (110, 310, 120, 320) mit zunehmenden Abständen zwischen den Elektroden und den ersten Enden der Separatoren (110, 310, 120, 320) vergrößern.

6. Elektrodenanordnung für eine Batterie, umfassend:
eine Mehrzahl von ersten Elektroden (140a, 140b, 140c, 140d, 140e, 240, 330a, 330d, 330e, 330h, 330i),
eine Mehrzahl von zweiten Elektroden (150a, 150b, 150c, 150d, 150e, 250, 330b, 330c, 330f, 330g), wobei die Mehrzahl von ersten Elektroden und die Mehrzahl von zweiten Elektroden so angeordnet sind, dass sie einen alternierenden Stapel von Elektroden (130) bilden,
einen ersten Separator (110, 310), der durch den alternierenden Stapel von Elektroden (130) gewickelt ist, so dass der erste Separator (110, 310) zwischen benachbarten ersten und zweiten Elektroden eingeschoben ist, und
einen zweiten Separator (120, 320), der durch den Stapel von Elektroden (130) gewickelt ist, so dass der zweite Separator (120, 320) zwischen benachbarten zweiten und ersten Elektroden eingeschoben ist und so dass der zweite Separator (120, 320) zwischen benachbarten Abschnitten des ersten Separators, die zwischen den benachbarten ersten und zweiten Elektroden eingeschoben sind, eingeschoben ist,
**dadurch gekennzeichnet, dass** eine Mittelelektrode (140a, 330a) zwischen dem ersten Separator (110, 310) und dem zweiten Separator (120, 320) an inneren Enden der Separatoren positioniert ist und an inneren Endabschnitten des ersten und des zweiten Separators eine Innenfläche (110a, 310a) des ersten Separators (110, 310) und eine Innenfläche (120a, 320a) des zweiten Separators (120, 320) einander zugewandt sind.

7. Anordnung nach Anspruch 6, wobei der erste Separator (110, 310) eine Mehrzahl von gestapelten ersten Separatorgliedern (111 a, 111 b, 111 c, 111 d, 311 a, 311 b, 311 c, 311 d) bestimmt und der zweite Separator eine Mehrzahl von gestapelten zweiten Separatorgliedern (121 a, 121 b, 121 c, 121 d, 321 a, 321 b, 321 c, 321 d) bestimmt und wobei die ersten und zweiten gestapelten Separatorglieder abwechselnd zwischen ersten und zweiten Elektroden innerhalb des Stapels von Elektroden eingeschoben sind.

8. Anordnung nach Anspruch 6 oder 7, wobei innere Enden sowohl des ersten als auch des zweiten Separators (110, 310, 120, 320) an dem innersten Bereich des Elektrodenstapels positioniert sind.

9. Anordnung nach einem der Ansprüche 6 bis 8, wobei die erste Elektrode (140a, 140b, 140c, 140d, 140e, 240, 330a, 330d, 330e, 330h, 330i) eine positive Elektrode umfasst und die zweite Elektrode (150a, 150b, 150c, 150d, 150e, 250, 330b, 330c, 330f, 330g) eine negative Elektrode umfasst.

10. Anordnung nach einem der Ansprüche 6 bis 9, wobei die ersten Elektroden (240, 330a, 330d, 330e, 330h, 330i) und zweiten Elektroden (250, 330b, 330c, 330f, 330g) jeweils aus mindestens einer positiven Elektrode und mindestens einer negativen Elektrode zusammengesetzt sind, die durch diskrete Separatoren (244, 245, 254, 255, 331) getrennt sind.

11. Anordnung nach Anspruch 10, wobei die erste Elektrode (240) eine erste und eine zweite positive Elektrode (241, 242) und eine negative Elektrode (243), die zwischen der ersten und der zweiten positiven Elektrode (241, 242) eingeschoben ist, umfasst, wobei die diskreten Separatoren (244, 245) zwischen der ersten und der zweiten positiven Elektrode (241, 242) und der negative Elektrode (243) eingeschoben sind, und die zweiten Elektroden (250) eine erste und eine zweite negative Elektrode (251, 252) und eine positive Elektrode (253), die zwischen der ersten und der zweiten negativen Elektrode (251, 252) eingeschoben ist, umfassen, wobei die diskreten Separatoren (254, 255) zwischen der ersten und der zweiten negativen Elektrode (251, 252) und der positiven Elektrodenplatte (253) eingeschoben sind.

12. Anordnung nach einem der Ansprüche 6 bis 11, wobei die erste Elektrode eine positive Elektrodenplatte umfasst, die eine erste und eine zweite Seite hat, wobei die positive Elektrodenplatte einen Elektrodensammler bestimmt und wobei die erste und die zweite Seite der positiven Elektrodenplatte mit einer Füllmasse einer positiven Elektrode beschichtet sind, und die zweite Elektrode eine negative Elektrodenplatte umfasst, die eine erste und eine zweite Seite hat, wobei die negative Elektrodenplatte einen Elektrodensammler bestimmt und wobei die erste und die zweite Seite der negativen Elektrodenplatte mit einer Füllmasse einer negativen Elektrode beschichtet sind.

13. Anordnung nach einem der Ansprüche 6 bis 12, wobei der erste Separator (110, 310) ein durchgängiges Stück Material ist, das in einer ersten Richtung um den Stapel von Elektroden herumgewickelt ist, und der zweite Separator (120, 320) ein durchgängiges Stück Material ist, das in einer ersten Richtung um den Stapel von Elektroden herumgewickelt ist.

## Revendications

1. Procédé de formation d'un ensemble d'électrodes comportant une région la plus à l'intérieur, comprenant :
la fourniture d'un premier séparateur (110, 310) ayant des première et deuxième électrodes alternées (150a, 140b, 150c, 140d, 330b, 330d, 330f) positionnées sur celui-ci ;
la fourniture d'un deuxième séparateur (120, 320) ayant des première et deuxième électrodes alternées (150b, 140c, 150d, 140e, 330c, 330e, 330g) positionnées sur celui-ci, avec une première extrémité du premier séparateur (110, 310) adjacente à une première extrémité du deuxième séparateur (120, 320) ;
l'enroulement des premier et deuxième séparateurs (110, 310, 120, 320) l'un avec l'autre, de sorte que les premières extrémités des premier et deuxième séparateurs (110, 310, 120, 320) soient positionnées dans la région la plus à l'intérieur de l'ensemble d'électrodes.
**caractérisé en ce que** les électrodes sur le premier séparateur (110, 310) sont positionnées sur un côté du séparateur opposé aux électrodes positionnées sur le deuxième séparateur (120, 320) et une électrode centrale (140a, 330a) est positionnée entre les séparateurs au niveau de la partie de superposition.

2. Procédé selon la revendication 1, comprenant en outre :
l'enroulement des premier et deuxième séparateurs (110, 310, 120, 320) de sorte que les premier et deuxième séparateurs (110, 310, 120, 320) soient interposés alternativement entre les première et deuxième électrodes.

3. Procédé selon la revendication 1 ou 2, dans lequel, avant l'enroulement, les premières extrémités des premier et deuxième séparateurs se superposent mutuellement de sorte qu'une surface intérieure (110a, 310a) du premier séparateur (110, 310) et une surface intérieure (120a, 320a) du deuxième séparateur (120, 320) se font mutuellement face au niveau de la région la plus à l'intérieur de l'ensemble d'électrodes.

4. Procédé selon l'une quelconque des revendications 1 à 3, dans lequel les premières électrodes sont des électrodes positives et les deuxièmes électrodes sont des électrodes négatives.

5. Procédé selon l'une quelconque des revendications 1 à 4, dans lequel les électrodes sont positionnées sur les séparateurs de sorte que les électrodes adjacentes sur les séparateurs (110, 310, 120, 320) soient espacées d'autant plus les unes des autres que les électrodes sont positionnées plus éloignées des premières extrémités des séparateurs (110, 310, 120, 320).

6. Ensemble d'électrodes pour une batterie comprenant :
une pluralité de premières électrodes (140a, 140b, 140c, 140d, 140e, 240, 330a, 330d, 330e, 330h, 330i) ;
une pluralité de deuxièmes électrodes (150a, 150b, 150c, 150d, 150e, 250, 330b, 330c, 330f, 330g), dans lequel la pluralité de premières électrodes et la pluralité de deuxièmes électrodes sont agencées en une pile d'électrodes alternées (130) ;
un premier séparateur (110 ; 310) qui est enroulé à travers la pile d'électrodes alternées (130) de sorte que le premier séparateur (110, 310) soit interposé entre des première et deuxième électrodes adjacentes ; et
un deuxième séparateur (120, 320) qui est enroulé à travers la pile d'électrodes (130) de sorte que le deuxième séparateur (120, 320) soit interposé entre des deuxième et première électrodes adjacentes et de sorte que le deuxième séparateur (120, 320) soit interposé entre les parties adjacentes du premier séparateur qui sont interposées entre les première et deuxième électrodes adjacentes,
**caractérisé en ce qu'**une électrode centrale (140a, 330a) est positionnée entre le premier séparateur (110, 310) et le deuxième séparateur (120, 320) au niveau des extrémités intérieures des séparateurs, et au niveau des parties d'extrémité intérieure des premier et deuxième séparateurs, une surface intérieure (110a, 310a) du premier séparateur (110, 310) et une surface intérieure (120a, 320a) du deuxième séparateur (120, 320) se font mutuellement face.

7. Ensemble selon la revendication 6, dans lequel le premier séparateur (110, 310) définit une pluralité de premiers éléments de séparateur empilés (111a, 111b, 111c, 111d, 311a, 311b, 311c, 311d) et le deuxième séparateur définit une pluralité de deuxièmes éléments de séparateur empilés (121a, 121b, 121c, 121d, 321a, 321b, 321c, 321d), et dans lequel les premier et deuxième éléments de séparateur empilés sont interposés alternativement entre des première et deuxième électrodes dans la pile d'électrodes.

8. Ensemble selon la revendication 6 ou 7, dans lequel les extrémités intérieures à la fois des premier et deuxième séparateurs (110, 310, 120, 320) sont positionnées au niveau de la région la plus à l'intérieur de la pile d'électrodes.

9. Ensemble selon l'une quelconque des revendications 6 à 8, dans lequel la première électrode (140a, 140b, 140c, 140d, 140e, 240, 330a, 330d, 330e, 330h, 330i) comprend une électrode positive et la deuxième électrode (150a, 150b, 150c, 150d, 150e, 250, 330b, 330c, 330f, 330g) comprend une électrode négative.

10. Ensemble selon l'une quelconque des revendications 6 à 9, dans lequel les premières électrodes (240, 330a, 330d, 330e, 330h, 330i) et les deuxièmes électrodes (250, 330b, 330c, 330f, 330g) sont composées chacune d'au moins une électrode positive et d'au moins une électrode négative qui sont séparées par des séparateurs discrets (244, 245, 254, 255, 331).

11. Ensemble selon la revendication 10, dans lequel la première électrode (240) comprend des première et deuxième électrodes positives (241, 242) et une électrode négative (243) qui est interposée entre les première et deuxième électrodes positives (241, 242), dans lequel les séparateurs discrets (244, 245) sont interposés entre les première et deuxième électrodes positives (241, 242) et l'électrode négative (243), et les deuxièmes électrodes (250) comprennent des première et deuxième électrodes négatives (251, 252) et une électrode positive (253) qui est interposée entre les première et deuxième électrodes négatives (251, 252), dans lequel les séparateurs discrets (254, 255) sont interposés entre les première et deuxième électrodes négatives (251, 252) et la plaque d'électrode positive (253).

12. Ensemble selon l'une quelconque des revendications 6 à 11, dans lequel la première électrode comprend une plaque d'électrode positive comportant des premier et deuxième côtés, dans lequel la plaque d'électrode positive définit un collecteur d'électrode, et dans lequel les premier et deuxième côtés de la plaque d'électrode positive sont revêtus d'un matériau actif d'électrode positive, et la deuxième électrode comprend une plaque d'électrode négative comportant des premier et deuxième côtés, dans lequel la plaque d'électrode négative définit un collecteur d'électrode, et dans lequel les premier et deuxième côtés de la plaque d'électrode négative sont revêtus d'un matériau actif d'électrode négative.

13. Ensemble selon l'une quelconque des revendications 6 à 12, dans lequel le premier séparateur (110, 310) est un morceau continu de matériau qui est enroulé autour de la pile d'électrodes dans une première direction et le deuxième séparateur (120, 320) est un morceau continu de matériau qui est enroulé autour de la pile d'électrodes dans une première direction.
